# EUROPÄISCHE PATENTSCHRIFT

(11) **EP 1 415 294 B1**
(45) Veröffentlichungstag und Bekanntmachung des Hinweises auf die Patenterteilung: **09.05.2007**
(21) Anmeldenummer: 02767325.0
(22) Anmeldetag: 05.08.2002
(51) Int. Cl.: G09F 3/02

(54) **ETIKETT UND VERFAHREN ZUM NACHWEIS UNERWÜNSCHTER FEUCHTIGKEIT**
LABEL AND METHOD FOR DETECTING UNDESIRABLE MOISTURE
ETIQUETTE ET PROCEDE POUR DETECTER UNE HUMIDITE INDESIRABLE

(30) Priorität: 08.08.2001 DE 10138965
(43) Veröffentlichungstag der Anmeldung: 06.05.2004
(73) Patentinhaber: Schreiner GmbH & Co. KG, 85764 Oberschleissheim (DE)
(72) Erfinder: JORDAN, Markus, 81369 München (DE); SCHREINER, Helmut, 80995 München (DE); WECHSELBERGER, Dietmar, 82256 Fürstenfeldbruck (DE)
(74) Vertreter: Kehl, Günther
(86) Internationale Anmeldenummer: PCT/EP2002/008732
(87) Internationale Veröffentlichungsnummer: WO 2003/015060

(56) Entgegenhaltungen:
- EP-A- 1 001 264
- WO-A-98/23920
- DE-A- 19 907 045
- US-A- 3 844 718
- US-A- 4 098 120
- US-A- 4 990 284
- PATENT ABSTRACTS OF JAPAN vol. 40, no. 94, 6. September 1994 (1994-09-06) & JP 06 248207 A (TOPPAN PRINTING CO LTD.), 6. September 1994 (1994-09-06)

## Beschreibung

Die vorliegende Erfindung betrifft ein Nachweisetikett zum irreversiblen Kenntlichmachen des Auftretens von Feuchtigkeit am Anbringungsort des Nachweisetiketts sowie ein Verfahren zur irreversiblen Kenntlichmachung des Auftretens von Feuchtigkeit im Gehäuse eines elektrischen oder elektronischen Geräts.

Viele Produkte können Quaütätseinbußen erfahren oder gar ernstlich Schaden nehmen, wenn sie während ihrer Herstellung, beim Transport, bei der Lagerung oder im Gebrauch einem Übermaß an Feuchtigkeit ausgesetzt sind. Dies gilt in in besonderem Maße für elektrische und elektronische Geräte, wie beispielsweise Mobiltelefone. Insbesondere aufgrund von Temperaturschwankungen aus feuchter Luft kondensierendes Wasser, aber auch Spritzwasser oder infolge unachtsamen Umgangs verschüttete Flüssigkeiten können zu unerwünschten Folgeerscheinungen bis hin zur völligen Unbrauchbarkeit des Geräts führen. Sehr hohe Luftfeuchtigkeiten können bereits zu Beeinträchtigungen führen, ohne daß merkliche Kondensation auftritt. Durch Feuchtigkeitseintritt in das Gerätegehäuse entstandene Schäden können noch dauerhaft vorliegen, wenn das Gehäuseinnere längst wieder getrocknet ist.

Häufig entsteht aus diesem Problemkomplex heraus das Bedürfnis, eine Nachweismöglichkeit zu schaffen, die es erlaubt, auch im Nachhinein zu erkennen, ob ein Produkt einmal übermäßiger Feuchtigkeit ausgesetzt war. So hat beispielsweise der Erwerber eines elektronischen Geräts ein Interesse daran festzustellen, ob das Gerät vom Veräußerer ordnungsgemäß gelagert wurde. Möchte ein Verbraucher Garantieleistungen in Anspruch nehmen, weil ein elektronisches Gerät nicht mehr ordnungsgemäß funktioniert, so ist es für den Garantiegeber von Vorteil zu wissen, ob der Geräteschaden auf Feuchtigkeitseintritt aufgrund unsachgemäßen Gebrauchs zurückzuführen ist, so daß ein Gewährleistungsanspruch gegebenenfalls entfiele.

Aus WO 98/23920 ist ein Feuchtigkeitsanzeige-Etikett bekannt, welches aus einem Blättchen aus Folie, Papier oder Karton besteht, das auf seiner Rückseite mit einem feuchtigkeitsbeständigen Haftklebstoff beschichtet ist, und auf dessen Vorderseite ein oder mehrere Symbole, z.B. Punkte, Linien oder ein Logo, aus wasserlöslicher Tinte aufgebracht sind. Bei Auftreten von Feuchtigkeit am Anbringungsort des Etiketts verläuft die Tinte, die Symbole verlieren ihre ursprüngliche Gestalt und sehen verwaschen oder ausgefranst aus. Das in WO 98/23920 offenbarte Etikett läßt sich im Inneren eines Mobiltelefons auf den Rahmen, die Gehäuseinnenwand oder die Platine kleben. Beim Öffnen des Gehäuses kann dann ein Reparateur am Aussehen des Etiketts erkennen, ob das Gehäuseinnere Feuchtigkeit ausgesetzt war. Ein Nachteil der aus WO 98/23920 bekannten technischen Lösung ist darin zu sehen, daß das mögliche Verlaufen bzw. Ausfransen der Tintensymbole insbesondere von Laien nicht immer richtig eingeschätzt werden kann. Jedenfalls bedarf das Ablesen eines derartigen Etiketts zusätzlicher Erläuterungen, eine selbsterkfärende Umsetzung ist schwer vorstellbar. Da das Verlaufen von Tinte ein gradueller Vorgang ist, kann es mitunter schwierig sein, zu entscheiden, ob bereits ein feuchtebedingtes Ausfransen oder lediglich eine Ungenauigkeit des Drucks vorliegt. Auch ist es kaum möglich, die Anzeige so zu gestalten, daß erst ab einem bestimmten Schwellenwert, d.h. bei tatsächlich erheblicher Feuchteeinwirkung eine deutliche visuelle Veränderung wahrnehmbar wird. Zudem erfordert es die vorgesehene Anbringungsweise, das Gehäuse zu öffnen, bevor eine Aussage darüber getroffen werden kann, ob dessen Innenseite übermäßiger Feuchtigkeit ausgesetzt war. Der wenig ästethische Eindruck eines verlaufenden Farbflecks ist zwar angesichts des technischen Einsatzzwecks zunächst unerheblich, jedoch darf nicht außer acht gelassen werden, daß insbesondere Hersteller elektronischer Geräte meist bemüht sind, ihren Produkten eine prestigefördernde "High-Tech"-Anmutung zu geben, die auch anhand von Details wahrgenommen wird. Ein verlaufender Farbfleck dürfte einer solchen Anmutung eher abträglich sein, insbesondere, wenn er einen Mangel anzeigen soll. Eine visuell elegantere Lösung könnte hier dem Verbraucher technische Kompetenz auf dem Gebiet der Qualitätssicherung suggerieren und somit Kundenvertrauen wahren helfen.

In EP 1 001 264 A1 ist ein Feuchtigkeitsanzeige-Etikett offenbart, dessen Anbringung so vorgesehen ist, daß bereits ohne Öffnen des Gehäuses erkennbar wird, ob Wasser in ein Mobiltelefon eingedrungen ist. Eine wasserundurchlässige transparente Folie wird mit einem flachen, rahmenförmigen, beidseitig klebstoffbeschichteten Verbindungsstück unter einer Gehäuseöffnung angebracht, wobei das rahmenförmige Verbindungsstück die Öffnung umschließt und zusammen mit der Folie abdichtet. An der Unterseite der Folie ist mittels zweier doppelseitig haftender Klebestreifen ein weißer Papierstreifen befestigt, der auf seiner Oberseite im Bereich zwischen den Klebestreifen teilweise mit roter Wasserfarbe bedruckt ist. Da die Klebestreifen den bedruckten Bereich nur von zwei Seiten her einschließen, kann von zwei Seiten her aus dem Gehäuseinneren Wasser an ihn herangelangen. Der Aufdruck ist durch die Gehäuseöffnung und die transparente Folie hindurch sichtbar. Die Funktionsweise ist in EP 1 001 264 A1 nicht näher erläutert. Mit drei doppelseitig klebend beschichteten Elementen, von denen eines Rahmenform aufweist, ist der Aufbau des Feuchtigkeitsanzeige-Etiketts relativ aufwendig und entsprechend teuer in der Herstellung.

Aus US 4,098,120 ist ein Feuchtigkeitsanzeige-Etikett offenbart, bei weichem ein Farbstoff in einem Farbstoffreservoir vorliegt und bei Feuchtigkeitseinwirkung über ein Dochtmaterial unter ein Sichtfenster migriert. Das Etikett weist einen im Verhältnis zu anderen Feuchtigkeitsanzeige-Etiketten recht komplizierten Aufbau auf. Zudem spricht es bei Feuchtigkeitseinwirkung aufgrund des langen Migrationswegs durch das Dochtmaterial mit einer relativ großen Verzögerung an.

Angesichts der oben geschilderten Problematik liegt der vorliegenden Erfindung die Aufgabe zugrunde, ein Nachweisetikett zum irreversiblen Kenntlichmachen des Auftretens von Feuchtigkeit am Anbringungsort des Nachweisetiketts zu schaffen, welches die genannten Nachteile herkömmlicher Feuchtigkeitsanzeige-Etlketten nicht oder nur in vermindertem Maße aufweist. Insbesondere besteht die Aufgabe der Erfindung auch darin, die Feuchtigkeits-Anzeigefunktion deutlich und nach Möglichkeit selbsterklärend umzusetzen, ohne den Etikettenaufbau zu sehr zu verkomplizieren. Darüberhinaus soll ein Verfahren zur irreversiblen Kenntlichmachung des Auftretens von Feuchtigkeit im Gehäuse eines elektrischen oder elektronischen Geräts geschaffen werden, weiches von einem solchen vorteilhafteren Etikett Gebrauch macht.

Nach einem Aspekt der Erfindung wird diese Aufgabe durch ein Nachweisetikett zum irreversiblen Kenntlichmachen des Auftretens von Feuchtigkeit am Anbringungsort des Nachweisetiketts, beispielsweise im Gehäuse eines elektrischen oder elektronischen Geräts, gelöst, welches ein flaches, aus einem weitgehend opaken, porösen Bedruckstoff bestehendes Materialstück aufweist, welches an seiner Unterseite teilflächig mit einem dispers in einem Bindemittel, vorzugsweise auf Glycerinbasis, vorliegenden, Farbstoff versehen ist, der bei Auftreten von Feuchtigkeit durch Migration an die Oberseite des Materialstücks sichtbar wird. Hierbei sorgt die an der Unterseite auftretende Feuchtigkeit für das Lösen des Bindemittels, wodurch der Farbstoff, bei dem es sich um geeignete Pigmente handeln kann, beweglich wird und aufgrund von Kapillaritäts- und Diffusionseffekten durch den porösen Bedruckstoff hindurch an die sichtbare Oberseite des Materialstücks migriert. Darüberhinaus kann eine Vielzahl in der Technik bekannter wasserfugitiver bzw. wasseraktiver Farben eingesetzt werden. Als Unterseite ist die Seite zu verstehen, welche durch Anbringen des Etiketts verdeckbar ist, d.h. die Seite, zwischen welcher und dem Betrachter sich nach Anbringung des Etiketts das Materialstück befindet.

Ein großer Vorteil der vorliegenden Erfindung besteht darin, daß der Farbstoff zunächst auf der Unterseite des vorzugsweise aus ungestrichenem Papier, Zellstoffvlies, Tissue-Papier, Löschpapier oder einer wasserbenetzbaren Membran bestehenden Materialstücks vorliegt und aufgrund der Opakizität des Materialstücks bei ausbleibender Feuchtigkeitseinwirkung von der Oberseite her unsichtbar bleibt. Das Auftreten von übermäßiger Feuchtigkeit wird also nicht wie nach dem Stand der Technik durch Veränderung, sondern durch Erscheinen einer Farbfläche angezeigt. Besonders deutlich wird die Anzeigefunkion bei Verwendung eines weißen oder blaß-farbigen Bedruckstoffs und eines Farbstoffs in einer kräftigen Kontrastfarbe. Der Farbstoff kann an der Unterseite des Materialstücks vollflächig, punktuell, streifen- oder balkenförmig aufgetragen sein. Auch Schriften, Firmenlogos oder andere Symbole sind möglich. Durch geeignete Wahl der Dicke, Porenstruktur und Benetzungseigenschaften des Bedruckstoffs sowie der Hygroskopizität und Wasselöslichkeit des Bindemittels kann gezielt eingestellt werden, ab welchem Ausmaß an auftretender Feuchtigkeit diese angezeigt wird.

Gemäß einer besonders vorteilhaften Weiterbildung können durch Einsatz von opakern Negativdruck in der Farbe des Materialstücks auf dessen Vorderseite oder einer darauf applizierten Transparentfolie Schriftzüge, Warnhinweise oder dergleichen kantenscharf sichtbar gemacht werden, indem das zugehörige Positiv bei Feuchtigkeitseinwirkung in der Farbe des an die Oberseite migrierenden Farbstoffs aufscheint. Auf diese Weise kann die Anzeigefunktion selbsterklärend gestaltet werden. Bei Feuchtigkeitseinwirkung kann beispielsweise ein Schriftzug erscheinen, der besagt: "Achtung! Dieses Gerät könnte aufgrund von Feuchtigkeitseinwirkung beschädigt sein!", "Feuchtigkeitseintritt!" oder dgl. Selbstverständlich kann alternativ auch ein Schriftzug durch Positivdruck in der Farbe des Materialstücks aufgebracht sein. Bei vollflächigem Farbstoffauftrag auf der Rückseite des Materialstücks wird so der Text unter Feuchtigkeitseinwirkung durch Änderung der Hintergrundfarbe sichtbar. Selbstverständlich kann noch ein anderer, permanent sichtbarer Aufdruck am Nachweisetikett angebracht sein.

In einer weiteren bevorzugten Ausführungsform ist der Farbstoff mikroverkapselt, wobei die Mikrokapseln unter Feuchteeinfluß sich lösen bzw. aufbrechen und den Farbstoff freisetzen.

Gemäß einer besonders bevorzugten Weiterbildung ist das Nachweisetikett an seiner Oberseite mit einer transparenten, wasserundurchlässigen Abdeckfolie versehen, die vorzugsweise mittels Haftklebstoff, Kaschierklebstoff oder Heißsiegelung auf dem Materialstück angebracht ist. Vorteilhafterweise kann die Abdeckfolie nach mindestens einer Seite, vorzugsweise aber nach alllen Seiten über das Materialstück hinausragen, wobei der über das Materialstück hinausragende Teil der Abdeckfolie an seiner Unterseite zumindest teilflächig selbstklebend beschichtet ist. Somit läßt sich das Nachweisetikett mittels seines selbstklebenden Rands anbringen. Ist der überstehende Teil vollflächig mit Klebstoff beschichtet, so kann das Nachweisetikett leicht von außen dichtend über eine Geäuseöffnung geklebt werden, welche in etwa die gleiche Flächenausdehnung wie das Materialstück aufweist. Bei Auftreten übermäßiger Feuchtigkeit im Gehäuseinneren wird von außen eine Farbänderung sichtbar. Lediglich außerhalb des Gehäuses herrschende Feuchtigkeit führt aufgrund der Dichtwirkung der Transparentfolie dagegen zu keinem Farbumschlag, da so die Unterseite des Materialstücks trocken bleibt. Ein derart gestaltetes Etikett eignet sich auch zur Versiegelung von Produktverpackungen. Anstatt über der Gehäuseöffnung eines elektronischen Geräts wird das Etikett dann über einer Packungsöffnung angebracht, die von dem rundum überstehenden selbstklebenden Transparentfolienrand abgedichtet wird. Somit kann die Überwachung anderer feuchtigkeitsempfindlicher Produkte in Hinblick auf in die Verpackung eingedrungene, eventuell zum Verderb führende Feuchtigkeit bewerkstelligt werden.

Gemäß einer anderen vorteilhaften Ausführungsform ist das Nachweisetikett an seiner Oberseite zumindest teilflächig selbstklebend beschichtet. Somit kann es beispielsweise von innen gegen eine transparente Glas- oder Kunststofffläche eines Gehäuses geklebt werden. Durch die transparente Fläche hindurch wird dann eine auf die oben beschriebenen Weise durch Feuchtigkeit im Gehäuse hervorgerufene Farbstoffmigration von außen sichtbar. Ist das Etikett mit einer Abdeckfolie aus Kunststoff versehen, und diese an ihrer Oberseite am Rand selbstklebend beschichtet, so kann das Etikett dichtend unter eine Gehäuseöffnung geklebt werden, deren Flächenausdehnung höchstens gleich groß ist, wie die vom selbstklebend beschichteten Rand eingeschlossene Fläche. In der Anwendung funktioniert das Etikett dann analog der oben beschreibenen Variante, bei welcher das Etikett von außen über eine Gehäuseöffnung geklebt wird.

Gemäß einer weiteren vorteilhaften Weiterbildung weist das Nachweisetikett ein Sicherheitsmerkmal zur Gewährleistung von Fälschungssicherheit auf. Hierbei kann es sich um eine beliebige aus dem Stand der Technik bekannte Maßnahme handeln, etwa einen Mikrostrukturaufdruck oder ein Hologramm. Auch kann das Etikett so ausgebildet sein, daß es bei dem Versuch es abzulösen einen sogenannten "Footprint", d.h. ein Merkmal hinterläßt, welches anzeigt, daß sich an der bewußten Stelle einmal ein Etikett befunden hat. Mit derartigen Maßnahmen läßt sich vermeiden, daß ein durch Feuchtigkeitseinfluß in Mitleidenschaft gezogenes Produkt durch Ersetzen des die Feuchtigkeitseinwirkung anzeigenden Etiketts auf betrügerische Weise als unbedenklich umgekennzeichnet werden kann.

Gemäß einem weiteren Aspekt der Erfindung wird ein Verfahren zur irreversiblen Kenntlichmachung des Auftretens von Feuchtigkeit im Gehäuse eines elektrischen oder elektronischen Geräts bereitgestellt, welches das Anbringen eines Nachweisetiketts der oben beschriebenen erfindungsgemäßen Art am oder im Gehäuse beinhaltet, wobei das Auftreten von Feuchtigkeit am Anbringungsort des Nachweisetiketts durch Migration des Farbstoffs an die Oberseite des Materialstücks erkennbar wird. Vorzugsweise wird das Nachweisetikett aufgeklebt, aber auch eine Befestigung durch Klemmen, Ultraschallschweißen oder andere geeignete Maßnahmen ist denkbar.

Vorzugsweise wird das Nachweisetikett so an einer Öffnung einer Gehäusewandung angebracht, daß das Auftreten von Feuchtigkeit auf der Gehäuseinnenseite durch Migration des Farbstoffs an die Oberseite des Materialstücks auf der Gehäuseaußenseite visuell erkennbar wird.

Nachfolgend werden einige bevorzugte Ausführungsformen der Erfindung anhand der zugehörigen Zeichnungen als Beispiele näher erläutert. Die Darstellungen sind nicht maßstäblich, insbesondere sind die Schichtdicken aus Anschaulichkeitsgründen stark vergrößert gezeichnet.
- Fig.1: zeigt hierbei in schematischer Schnitt-Darstellung den Schichtaufbau eines erfindungsgemäßen Nachweisetiketts mit Negativdruck auf der Oberseite des Materialstücks.
- Fig.2: zeigt in schematischer Schnitt-Darstellung den Schichtaufbau eines Etiketts, der dem in Fig.1 dargestellten Aufbau ähnlich ist, wobei der Negativdruck auf der Oberseite der Abdeckfolie aufgebracht sind.
- Fig.3-Fig.5: zeigen in schematischer Schnitt-Darstellung die Anbringung unterschiedlich ausgeführter erfindungsgemäßer Nachweisetiketten über bzw. unter der Öffnung einer Gehäusewandung
- Fig.6: zeigt, ebenfalls in schematischer Schnitt-Darstellung, die Anbringung eines erfindungsgemäßen Etiketts an der Innenseite eines transparenten Abschnitts einer Gehäusewandung.

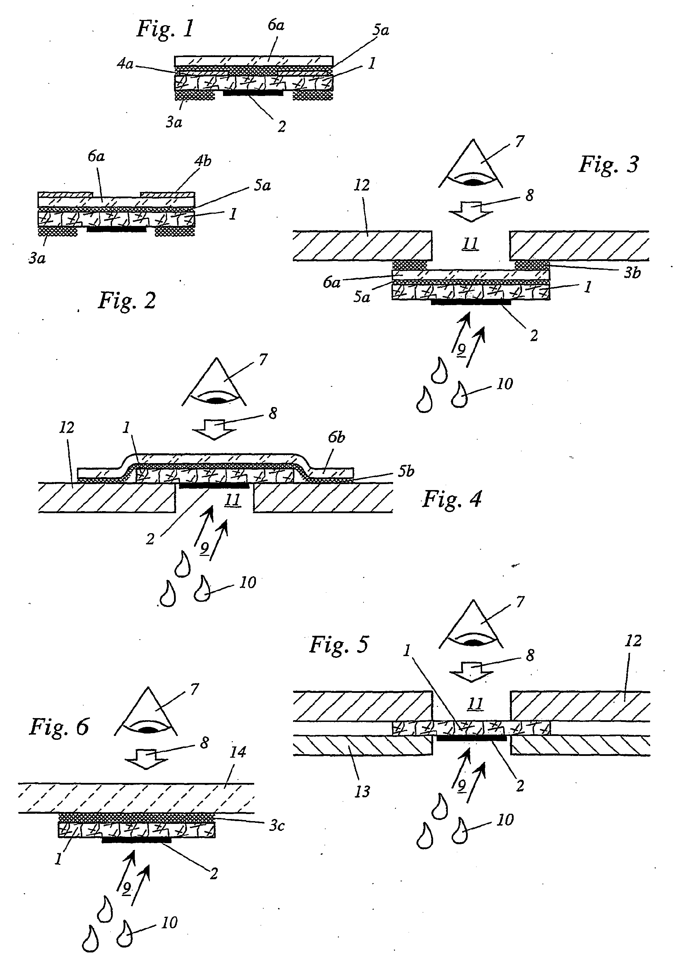

Das in Fig.1 dargestellte Nachweisetikett weist ein weißes Papierstück 1 auf, an dessen Unterseite teilflächig ein tiefblauer wasseraktiver Farbstoff 2 aufgebracht ist. Die mit Farbstoff 2 versehene Fläche in Form eines Wamsymbols ist von einer Haftklebstoffbeschichtung 3a umgeben. Die Form des Warnsymbols wiederholt sich als Negativ in dem weißen, opaken Aufdruck 4a auf der Oberseite des Papierstücks 1. Tritt an der Unterseite des Papierstücks Feuchtigkeit auf, so wird der Farbstoff 2, bei dem es sich um geeignete, in einem Bindemittel dispers vorhandene Pigmente handelt, beweglich und migriert aufgrund von bekannten physikalischen Transportphänomenen durch das Papierstück 1 hindurch an die Oberseite des Papierstücks 1. Wegen des aufgedruckten Negativs wird das Warnsymbol kantenscharf durch die transparente, mittels einer ebenfalls transparenten Klebstoffschicht 5a applizierte Abdeckfolie 6a hindurch sichtbar. Die Veränderung ist auch für den ungeschulten Betrachter gut erkennbar, da vor Migration des Farbstoffs die Oberseite des Etiketts einfarbig weiß erscheint. Das in Fig.2 dargestellte Etikett ist analog aufgebaut. Allerdings befindet sich hier der Negativdruck 4b auf der Oberseite der Abdeckfolie 6a.

In den Figuren 3 bis 6 sind verschiedene Anbringungsvarianten erfindungsgemäßer Nachweisetiketten skizziert. Das Augensymbol 7 mit Pfeil 8 symbolisiert hierbei die Blickrichtung des prüfenden Betrachters, das Pfeilsymbol 9 mit Tropfen 10 den Halbraum, aus welchem Feuchtigkeit auf das Nachweisetikett einwirkt, d.h. die Gehäuseinnenseite. In den Figuren 3 bis 5 überdeckt das jeweilige Etikett eine Öffnung 11 in einer Gehäusewandung 12.

Das in Fig.3 dargestellte Nachweisetikett weist ein Papierstück 1 auf, welches mittels einer transparenten Klebstoffschicht 5a auf die Unterseite einer ebenfalls transparenten Folie 6a aufgeklebt ist. Auf der Unterseite des Papierstücks 1 ist wasserfugitiver Farbstoff 2 aufgetragen, der bei Feuchtigkeitseinwirkung an die Oberseite des Papierstücks 1 migriert und dort sichtbar wird. Mittels einer ring- oder rahmenförmigen Haftklebstoffbeschichtung 3b an der Oberseite der transparenten Folie 6 ist Etikett so von innen an der Gehäusewandung 12 angebracht, daß das Etikett aufgrund der Dichtwirkung der Folie 6a und der Haftklebstoffbeschichtung 3b auf Feuchtigkeitseinwirkung von der Gehäuseaußenseite her nicht reagiert.

Das in Fig. 4 dargestellte Nachweisetikett ist von außen an der Gehäusewandung 12 angebracht. Die transparente Klebstoffschicht 5b, über welche die transparente Folie 6b mit dem Papierstück 1 verbunden ist, dient zugleich der Befestigung des Nachweisetiketts auf der Gehäusewandung 12. Hierzu überragt die klebstoffbeschichtete Folie 6b das Papierstück 1 ring- oder rahmenförmig. Auf der Unterseite des Papierstücks 1 ist wiederum wasserfugitiver Farbstoff 2 aufgetragen, der bei Feuchtigkeitseinwirkung an die Oberseite des Papierstücks 1 migriert und dort sichtbar wird.

Das in Fig. 5 dargestellte Nachweisetikett besteht lediglich aus einem Papierstück 1, welches an seiner Unterseite wasserfugitiven Farbstoff 2 aufweist, der bei Feuchtigkeitseinwirkung an die Oberseite des Papierstücks 1 migriert und dort sichtbar wird. Das Papierstück 1 ist mittels einer gegen die Gehäusewandung 12 verspannten Klemmvorrichtung 13 so von der Gehäuseinnenseite her festgeklemmt, daß es die Öffnung 11 überdeckt.

Das in Fig.6 dargestellte Nachweisetikett weist ein an seiner Oberseite ganz oder teilweise mit einer transparenten Klebstoffschicht 3c versehenes Papierstück 1 auf, welches an seiner Unterseite mit wasserfugitiven Farbstoff 2 versehen ist, der bei Feuchtigkeitseinwirkung an die Oberseite des Papierstücks 1 migriert und dort sichtbar wird. Das Papierstück 1 ist mittels der Klebstoffschicht 3c von innen auf einen transparenten Gehäuseabschnitt 14 aufgeklebt. Dieser kann aus Glas oder transparentem Kunststoff bestehen.

## Patentansprüche

1. Nachweisetikett zum irreversiblen Kenntlichmachen des Auftretens von Feuchtigkeit am Anbringungsort des Nachweisetiketts, beispielsweise im Gehäuse eines elektrischen oder elektronischen Geräts,
aufweisend ein flaches, aus einem weitgehend opaken, porösen Bedruckstoff bestehendes Materialstück (1) und einen Farbstoff (2), der bei Auftreten von Feuchtigkeit durch Migration an die Oberseite des Materialstücks (1) sichtbar wird,
**dadurch gekennzeichnet,**
**daß** der Farbstoff dispers in einem Bindemittel vorliegt, welches auf die durch Anbringung des Nachweisetiketts verdeckbare Unterseite des Materialstücks (1) zumindest teilflächig aufgebracht ist.

2. Nachweisetikett nach Anspruch 1, wobei das Bindemittel ein Bindemittel auf Glycerinbasis ist.

3. Nachweisetikett nach einem der vorangehenden Ansprüche, wobei der Farbstoff (2) mikroverkapselt ist.

4. Nachweisetikett nach einem der vorangehenden Ansprüche, wobei es sich bei dem Bedruckstoff um ungestrichenes Papier, Zellstoffvlies, Tissue-Papier, Löschpapier oder eine wasserbenetzbare Membran handelt.

5. Nachweisetikett nach einem der vorangehenden Ansprüche, wobei das Nachweisetikett an seiner Oberseite mit einer transparenten, wasserundurchlässigen Abdeckfolie (6a, 6b) versehen ist.

6. Nachweisetikett nach Anspruch 5, wobei die Abdeckfolie (6a, 6b) mittels Haftklebstoff (5a, 5b), Kaschierklebstoff, Heißsiegelung oder Klemmung auf dem Materialstück (1) angebracht ist.

7. Nachweisetikett nach einem der Ansprüche 5-6, wobei die Abdeckfolie (6b) in der Ebene ihrer größten Flächenausdehnung nach mindestens einer Seite über das Materialstück (1) hinausragt.

8. Nachweisetikett nach Anspruch 7, wobei der über das Materialstück (1) hinausragende Teil der Abdeckfolie (6b) an seiner Unterseite zumindest teilflächig selbstklebend beschichtet ist.

9. Nachweisetikett nach einem der vorangehenden Ansprüche, wobei die Unterseite des Materialstücks (1) teilflächig mit einer selbstklebenden Beschichtung (3a) versehen ist.

10. Nachweisetikett nach einem der Ansprüche 1-7, wobei das Nachweisetikett an seiner Oberseite zumindest teilflächig selbstklebend beschichtet ist.

11. Nachweisetikett nach einem der vorangehenden Ansprüche, wobei das Materialstück (1) an seiner Oberseite einen Aufdruck aufweist.

12. Nachweisetikett nach einem der Ansprüche 5-8, wobei die Abdeckfolie an ihrer Oberseite einen Aufdruck (4a) aufweist.

13. Nachweisetikett nach einem der Ansprüch 11-12, wobei es sich bei dem Aufdruck (4a) um einen deckenden Negativdruck handelt, so daß das zugehörige Positiv bei Migration des Farbstoffs an die Oberseite des Materialstücks (1) in der Farbe des Farbstoffs (2) sichtbar wird.

14. Nachweisetikett nach einem der vorangehenden Ansprüche, wobei das Nachweisetikett ein Sicherheitsmerkmal zur Gewährleistung von Fälschungssicherheit aufweist.

15. Verfahren zur irreversiblen Kenntlichrriachung des Auftretens von Feuchtigkeit im Gehäuse eines elektrischen oder elektronischen Geräts,
wobei das Verfahren das Anbringen eines Nachweisetiketts, aufweisend ein flaches, aus einem weitgehend opaken, porösen Bedruckstoff bestehendes Materialstück (1) am oder im Gehäuse beinhaltet,
und das Auftreten von Feuchtigkeit am Anbringungsort des Nachweisetiketts durch Migration eines Farbstoffs (2) an die Oberseite des Materialstücks (1) erkennbar wird,
**dadurch gekennzeichnet,**
**daß** der Farbstoff (2) in einem auf der Unterseite des Nachweisetiketts aufgebrachten Bindemittel dispers vorliegt,
und die Unterseite beim Anbringen verdeckt wird.

16. Verfahren nach Anspruch 15, wobei es sich beim Anbringen des Nachweisetiketts um Aufkleben handelt.

17. Verfahren nach einem der Ansprüche 15-16, wobei das Nachweisetikett so an einer Öffnung (11) einer Gehäusewandung (12) angebracht wird, daß das Auftreten von Feuchtigkeit auf einer Seite der Gehäusewandung (12) durch Migration des Farbstoffs (2) an die Oberseite des Materialstücks (1) auf der anderen Seite der Gehäusewandung visuell erkennbar wird.

## Claims

1. A detection label for irreversibly identifying the occurrence of moisture at the application location of the detection label, for example, in the housing of an electrical or electronic device,
having a flat material part (1), comprising a largely opaque, porous printed material, and a pigment (2), which becomes visible in the event of the occurrence of moisture through migration to the top of the material part (1),
**characterized in that** the pigment is provided in dispersed form in a binder which is applied over at least part of the area of the bottom side of the material part (1), which may be covered by applying the detection label.

2. The detection label according to Claim 1, wherein the binder is a binder based on glycerin.

3. The detection label according to one of the preceding claims, wherein the pigment (2) is microencapsulated.

4. The detection label according to one of the preceding claims, wherein the printed material is uncoated paper, cellulose nonwoven material, tissue paper, blotting paper, or a water-wettable membrane.

5. The detection label according to one of the preceding claims, wherein the detection label is provided on its top side with a transparent, water-impermeable cover film (6a, 6b).

6. The detection label according to Claim 5, wherein the cover film (6a, 6b) is attached to the material part (1) using pressure-sensitive adhesive (5a, 5b), laminating adhesive, heat sealing, or clamping.

7. The detection label according to one of Claims 5 through 6, wherein the cover film (6b) projects beyond at least one side of the material part (1) in the plane of its largest area dimensions.

8. The detection label according to Claim 7, wherein the part of the cover film (6b) projecting beyond the material part (1) has a self-adhesive coating over at least a part of the area of its bottom side.

9. The detection label according to one of the preceding claims, wherein the bottom side of the material part (1) is provided over part of its area with a self-adhesive coating (3a).

10. The detection label according to one of Claims 1 through 7, wherein the detection label has a self-adhesive coating over at least part of the area of its top side.

11. The detection label according to one of the preceding claims, wherein the material part (1) has an imprint on its top side.

12. The detection label according to one of Claims 5 through 8, wherein the cover film has an imprint (4a) on its top side.

13. The detection label according to one of Claims 11 through 12, wherein the imprint (4a) is a covering negative print, so that the associated positive becomes visible in the color of the pigment (2) upon the migration of the pigment to the top side of the material part (1).

14. The detection label according to one of the preceding claims, wherein the detection label has a security feature for ensuring security from forgery.

15. A method for irreversibly identifying the occurrence of moisture in the housing of an electrical or electronic device,
the method including the application of a detection label, having a flat material part (1) comprising a largely opaque, porous printed material, on or in the housing,
and the occurrence of moisture at the application location of the detection label being recognizable through migration of a pigment (2) to the top side of the material part (1),
**characterized in that** the pigment (2) is provided in dispersed form in a binder applied to the bottom of the detection label,
and the bottom side is covered upon the application.

16. The method according to Claim 15, wherein the detection label is attached by being stuck on.

17. The method according to one of Claims 15 through 16, wherein the detection label is attached to an opening (11) of a housing wall (12) in such a way that the occurrence of moisture on one side of the housing wall (12) is visually recognizable through migration of the pigment (2) to the top side of the material part (1) on the other side of the housing wall.

## Revendications

1. Etiquette révélatrice pour la mise en évidence irréversible de l'apparition d'humidité à l'endroit d'application de l'étiquette révélatrice, par exemple dans le boîtier d'un appareil électrique ou électronique,
présentant un morceau de matière plat (1) composé d'une matière d'impression en grande partie opaque et poreuse et un colorant (2) qui, en cas d'apparition d'humidité, devient visible par migration vers la face supérieure du morceau de matière (1),
**caractérisé en ce que**
le colorant est présent sous forme dispersée dans un liant qui est appliqué du moins sur une partie de la surface de la face inférieure du morceau de matière (1) pouvant être masquée par application de l'étiquette révélatrice.

2. Etiquette révélatrice selon la revendication 1, dans laquelle le liant est un liant à base de glycérine.

3. Etiquette révélatrice selon une des revendications précédentes, dans laquelle le colorant (2) est micro-encapsulé.

4. Etiquette révélatrice selon une des revendications précédentes, dans laquelle il s'agit en ce qui concerne la matière d'impression de papier, non-tissé de cellulose, papier essuie-tout, papier buvard non couché ou d'une membrane pouvant être irriguée par de l'eau.

5. Etiquette révélatrice selon une des revendications précédentes, dans laquelle l'étiquette révélatrice est pourvue sur sa face supérieure d'un film de recouvrement transparent perméable à l'eau (6a, 6b).

6. Etiquette révélatrice selon la revendication 5, dans laquelle le film de recouvrement (6a, 6b) est appliqué au moyen de colle de contact (5a, 5b), de colle de contrecollage, par scellage à chaud ou blocage sur le morceau de matière (1).

7. Etiquette révélatrice selon une des revendications 5 et 6, dans laquelle le film de recouvrement (6b), dans le plan de sa plus grande extension surfacique, dépasse du morceau de matière (1) vers au moins un côté.

8. Etiquette révélatrice selon la revendication 7, dans laquelle la partie du film de recouvrement (6b) dépassant du morceau de matière (1) porte, du moins sur une partie de la surface, sur sa face inférieure, un revêtement autocollant.

9. Etiquette révélatrice selon une des revendications précédentes, dans laquelle la face inférieure du morceau de matière (1) est pourvue sur une partie de sa surface d'un revêtement autocollant (3a).

10. Etiquette révélatrice selon une des revendications 1 à 7, dans laquelle l'étiquette révélatrice porte un revêtement autocollant sur sa face supérieure, du moins sur une partie de la surface.

11. Etiquette révélatrice selon une des revendications précédentes, dans laquelle le morceau de matière (1) comporte sur sa face supérieure une impression.

12. Etiquette révélatrice selon une des revendications 5 à 8, dans laquelle le film de recouvrement comporte sur sa face supérieure une impression (4a).

13. Etiquette révélatrice selon une des revendications 11 et 12, dans laquelle il s'agit en ce qui concerne l'impression (4a) d'une impression négative couvrante, de sorte que le positif correspondant devient visible lors de la migration du colorant vers la face supérieure du morceau de matière (1) dans la couleur du colorant (2).

14. Etiquette révélatrice selon une des revendications précédentes, dans laquelle l'étiquette révélatrice présente une caractéristique de sécurité pour garantir une sécurité anti-falsification.

15. Procédé de mise en évidence irréversible de l'apparition d'humidité dans le boîtier d'un appareil électrique ou électronique,
dans lequel le procédé inclut l'application d'une étiquette révélatrice, présentant un morceau de matière plat (1) composé d'une matière d'impression en grande partie opaque et poreuse sur ou dans le boîtier,
et l'apparition d'humidité à l'endroit d'application de l'étiquette révélatrice devient reconnaissable du fait de la migration d'un colorant (2) vers la face supérieure du morceau de matière (1),
**caractérisé en ce que**
le colorant (2) est présent sous forme dispersée dans un liant appliqué sur la face inférieure de l'étiquette révélatrice
et la face inférieure est masquée lors de l'application.

16. Procédé selon la revendication 15, dans lequel il s'agit, lors de l'application de l'étiquette révélatrice, d'un collage.

17. Procédé selon une des revendications 15 et 16, dans lequel l'étiquette révélatrice est appliquée sur un orifice (11) d'une paroi de boîtier (12) de manière à ce que l'apparition d'humidité sur un côté de la paroi du boîtier (12) soit reconnaissable visuellement du fait de la migration du colorant (2) vers la face supérieure du morceau de matière (1) sur l'autre côté de la paroi de boîtier.
